(19) Europäisches Patentamt
European Patent Office
Office européen des brevets

(11) **EP 4 782 260 A1**

(12) **EUROPEAN PATENT APPLICATION**
published in accordance with Art. 153(4) EPC

(43) Date of publication:
29.07.2026 Bulletin 2026/31

(21) Application number: 24868638.8

(22) Date of filing: 13.09.2024

(51) International Patent Classification (IPC):
*B60L 53/37* (2019.01)   *B60L 53/36* (2019.01)
*B25J 13/08* (2006.01)   *B25J 9/16* (2006.01)
*B25J 11/00* (2006.01)   *B25J 19/02* (2006.01)

(52) Cooperative Patent Classification (CPC):
**B25J 9/16; B25J 11/00; B25J 13/08; B25J 19/02;
B60L 53/36; B60L 53/37; B60L 53/60; G06T 7/60;
G06V 20/10; G06V 20/52; G06V 20/62**

(86) International application number:
**PCT/KR2024/014032**

(87) International publication number:
**WO 2025/063661 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 19.09.2023  KR 20230124973

(71) Applicants:
• **Hyundai Motor Company**
**Seoul 06797 (KR)**
• **Kia Corporation**
**Seoul 06797 (KR)**

(72) Inventors:
• **LEE, Min Kyu**
**Hwaseong-si, Gyeonggi-do 18280 (KR)**
• **LEE, Tae Hwan**
**Hwaseong-si, Gyeonggi-do 18280 (KR)**

(74) Representative: **Viering, Jentschura & Partner
mbB**
**Patent- und Rechtsanwälte
Am Brauhaus 8
01099 Dresden (DE)**

(54) **IMAGE-BASED OBJECT DETECTION METHOD FOR ELECTRIC VEHICLE CHARGING,
CHARGING ROBOT, AND CONTROLLER OF CHARGING ROBOT**

(57)    An image-based object detection method for electric vehicle charging is discharged. The method comprises the steps of: detecting a first object corresponding to an electric vehicle from an image obtained by a camera outside of an electric vehicle; estimating the position and angle of the electric vehicle in a parking space on the basis of position information of the first object in the image; detecting, from the image, at least one second object that excludes the electric vehicle; and estimating the position of the at least one second object in the parking space on the basis of the position of the at least one second object in the image.

FIG. 15

EP 4 782 260 A1

**Description**

[Technical Field]

The present disclosure relates to an electric vehicle supply equipment (EVSE) including a charging manipulator for charging an electric vehicle, and, more particularly, to an image-based object detection technology for safe charging of the electric vehicle (image-based object detection method for electric vehicle charging, charging robot, and controller of the charging robot).

[Background Art]

Recently developed electric vehicles (EVs) drive motors using battery power, and have advantages such as fewer air pollutants such as exhaust gas and noise compared to conventional gasoline engine vehicles, fewer failures, long service life, and simple driving operation.

Electric vehicles may be classified into a hybrid electric vehicle (HEV), a plug-in hybrid electric vehicle (PHEV), and an electric vehicle (EV) depending on driving sources. An HEV includes an engine as a main power source and a motor as an auxiliary power source. A PHEV includes a motor as a main power source and an engine used when the battery is discharged. An EV includes a motor but does not include an engine.

An electric vehicle charging system may basically be defined as a system for charging a battery mounted in an electric vehicle by using power of a power distribution grid or an energy storage device. The electric vehicle charging system may have various forms depending on the type of electric vehicle. For example, the electric vehicle charging system may include a conductive charging system using a cable or a contactless wireless power transfer system.

During charging of an electric vehicle, a vehicle assembly (VA) mounted in the electric vehicle may form inductive resonant coupling with a transmission pad of a ground assembly (GA) located at a charge station or charging spots. The electric vehicle may charge its battery by using power delivered from the ground assembly through the inductive resonant coupling.

A robot arm or a manipulator may be used to supply power from an electric vehicle supply equipment (EVSE) to a charging door or port of an electric vehicle.

In this case, considering various types of electric vehicle charging doors, various types of electric vehicle supply equipment, and various charging methods, it is necessary to define procedures for positioning between an electric vehicle and a manipulator and procedures for a preparation stage for supplying power.

[Disclosure]

[Technical Problem]

An objective of the present disclosure is to define and propose a procedure for a preparation stage that may accurately recognize a situation around an EVSE or a charging robot in a charging station in order to ensure safety when power is supplied from a power supply device or a power supply apparatus (EVSE, Electric Vehicle Supply Equipment) to an electric vehicle.

Another objective of the present disclosure is to define and provide a procedure for a preparation stage that can detect an unsuitable parking state for charging or a hazardous situation that may occur due to an approach of a human during a charging operation, and can ensure safety, based on an image around a parking space in the charging station.

Another objective of the present disclosure is to provide an interlocking system between a camera around the parking space in the charging station, which may obtain an image of an exterior of the electric vehicle, and the charging robot.

[Technical Solution]

According to an aspect of an exemplary embodiment of the present disclosure, a method for image-based object detection for charging an electric vehicle, may include detecting a first object corresponding to the electric vehicle from an image obtained by a camera configured to obtain an image of the electric vehicle from outside the electric vehicle; estimating a position and an angle of the electric vehicle on a parking space based on position information of the first object in the image; detecting at least one second object other than the electric vehicle from the image; and estimating a position of the at least one second object on the parking space based on a position of the at least one second object in the image.

The estimating of the position and the angle of the electric vehicle may include estimating the position and the angle of the electric vehicle on a two-dimensional coordinate system having a position on a boundary line of the parking space as a reference point.

The estimating of the position and the angle of the electric vehicle may include mapping the first object onto a two-dimensional map corresponding to the parking space based on the position information of the first object in the image, and estimating a position and an angle of the first object on the two-dimensional map as the position and the angle of the electric vehicle.

In the method for image-based object detection for charging an electric vehicle according to an exemplary embodiment of the present disclosure, the detecting of the first object corresponding to the electric vehicle may include segmenting an outline of the first object, and a position and an angle of the first object in the image may be obtained based on a segmentation result of the first object.

The method for image-based object detection for charging an electric vehicle according to an exemplary embodiment of the present disclosure, may further include detecting a third object corresponding to a license plate of the electric vehicle from the image, and the estimating of the position and the angle of the electric vehicle may include assisting extraction of the position information of the first object in the image based on a position and an angle of the third object in the image.

The method for image-based object detection for charging an electric vehicle according to an exemplary embodiment of the present disclosure, may further include detecting a third object corresponding to a license plate of the electric vehicle from the image, and the estimating of the position and the angle of the electric vehicle may include estimating an angle of the electric vehicle on the parking space based on an angle of the third object in the image.

The method for image-based object detection for charging an electric vehicle according to an exemplary embodiment of the present disclosure, may further include identifying a license plate of the electric vehicle from the image, and extracting vehicle information of the electric vehicle from a database by using the license plate of the electric vehicle, and the estimating of the position and the angle of the electric vehicle may include estimating the position and the angle of the electric vehicle on the parking space by using the vehicle information of the electric vehicle.

The method for image-based object detection for charging an electric vehicle according to an exemplary embodiment of the present disclosure, may further include estimating a position of a charging port of the electric vehicle based on the position and the angle of the electric vehicle on the parking space, and determining whether the position of the charging port of the electric vehicle is within an operation range of a charging robot.

The method for image-based object detection for charging an electric vehicle according to an exemplary embodiment of the present disclosure, may further include guiding the electric vehicle to re-park based on the position of the charging port of the electric vehicle not being within the operation range of the charging robot, and guiding the charging robot to approach the electric vehicle based on the position of the charging port of the electric vehicle being within the operation range of the charging robot.

In the method for image-based object detection for charging an electric vehicle according to an exemplary embodiment of the present disclosure, the at least one second object includes a person or an animal.

The method for image-based object detection for charging an electric vehicle according to an exemplary embodiment of the present disclosure, may further include determining whether any one of the at least one second object is located within an operation range of the charging robot, and performing an action related to safety based on any one of the at least one second object being located within the operation range of the charging robot.

According to an aspect of an exemplary embodiment of the present disclosure, a controller of a charging robot associated with an electric vehicle supply equipment (EVSE) including a charging manipulator to transfer power to an electric vehicle, may include a memory that stores at least one instruction; a processor that controls movement of the charging robot or the charging manipulator by loading and executing the at least one instruction from the memory; and a communication interface that transmits and receives information required for a process of transferring power to the electric vehicle with the EVSE.

In the charging robot and/or the controller of the charging robot according to an exemplary embodiment of the present disclosure, the processor may be configured to obtain a position and an angle of the electric vehicle on a parking space, the position and the angle being estimated from an image obtained by a camera configured to obtain an image of the electric vehicle from outside the electric vehicle, obtain a position of at least one object other than the electric vehicle on the parking space, the position being detected from the image, and determine whether the electric vehicle is in a state in which charging of the electric vehicle is possible based on the position and the angle of the electric vehicle on the parking space and the position of the at least one object on the parking space.

In the charging robot and/or the controller of the charging robot according to an exemplary embodiment of the present disclosure, the position and the angle of the electric vehicle on the parking space and the position of the at least one object on the parking space may be represented as a position and an angle on a two-dimensional coordinate system having a position on a boundary line of the parking space as a reference point.

In the charging robot and/or the controller of the charging robot according to an exemplary embodiment of the present disclosure, the processor may be configured to determine that the electric vehicle is not in a state in which charging of the electric vehicle is possible based on a position of a charging port of the electric vehicle estimated in view of the position and the angle of the electric vehicle on the parking space not being within an operation range of the charging robot.

In the charging robot and/or the controller of the charging robot according to an exemplary embodiment of the present disclosure, the processor may be configured to determine that the electric vehicle is not in a state in which charging of the electric vehicle is possible based on a position of the at least one object on the parking space being within an operation range of the charging robot.

In the charging robot and/or the controller of the charging robot according to an exemplary embodiment of the present disclosure, the processor may be configured to control movement of the charging robot and the charging manipulator to move the charging robot to the electric vehicle and connect the charging manipulator to a charging port of the electric vehicle based on the electric vehicle being in a state in which charging of the electric vehicle is possible.

[Advantageous Effects]

According to an exemplary embodiment of the present disclosure, a procedure for a preparation stage that can accurately recognize a situation around an EVSE or a charging robot in a charging station in order to ensure safety when power is supplied from a power supply device or a power supply apparatus (EVSE) to an electric vehicle can be provided.

According to an exemplary embodiment of the present disclosure, a procedure for a preparation stage that can detect an unsuitable parking state for charging or a hazardous situation that may occur due to an approach of a human during a charging operation, and can ensure safety, based on an image around a parking space in the charging station can be provided.

According to an exemplary embodiment of the present disclosure, an interlocking system between a camera around the parking space in the charging station, which can obtain an image of an exterior of the electric vehicle, and the charging robot can be implemented.

According to an exemplary embodiment of the present disclosure, since a situation is recognized using an image of a general camera without a need to mount an additional sensor on the charging robot, costs required to ensure safety and efficiency of a charging process can be reduced.

[Description of Drawings]

FIG. 1 is a view illustrating an example of an image-based object detection process for charging an electric vehicle to which an exemplary embodiment of the present disclosure is applied, and illustrating a state in which a charging port of the electric vehicle is parked outside an operation range of a charging robot.

FIG. 2 is a view illustrating, as an example of an image-based object detection process for charging an electric vehicle to which an exemplary embodiment of the present disclosure is applied, cameras disposed in a charging station and a parking space.

FIG. 3 is a view conceptually illustrating a process in which an image is obtained by a camera disposed in the parking space, as an example of an image-based object detection process for charging an electric vehicle to which an exemplary embodiment of the present disclosure is applied.

FIGS. 4 and 5 are views conceptually illustrating exemplary embodiments of a two-dimensional reference coordinate system of the parking space to which an exemplary embodiment of the present disclosure is applied.

FIG. 6 is a flowchart illustrating an image-based object detection process for charging an electric vehicle according to an exemplary embodiment of the present disclosure.

FIG. 7 is a flowchart illustrating an image-based object detection process for charging an electric vehicle according to another exemplary embodiment of the present disclosure.

FIG. 8 is a view conceptually illustrating a process in which a position and an angle of the electric vehicle are estimated on the two-dimensional reference coordinate system of the parking space, as an example of an image-based object detection process for charging an electric vehicle to which an exemplary embodiment of the present disclosure is applied.

FIG. 9 is a flowchart conceptually illustrating an exemplary embodiment in which an image-based object detection process for charging an electric vehicle and a charging robot control process are linked according to an exemplary embodiment of the present disclosure.

FIG. 10 is a flowchart conceptually illustrating a charging robot control process linked with an image-based object detection process for charging an electric vehicle according to an exemplary embodiment of the present disclosure.

FIG. 11 is a flowchart illustrating a process for checking safety of a charging process and/or a charging preparation process as an image-based object detection process for charging an electric vehicle according to another exemplary embodiment of the present disclosure.

FIG. 12 is a flowchart illustrating an image-based object detection process for charging an electric vehicle according to another exemplary embodiment of the present disclosure.

FIG. 13 is a view conceptually illustrating a process for estimating a position of an object in consideration of a position of a camera in an image-based object detection process for charging an electric vehicle according to an exemplary embodiment of the present disclosure.

FIG. 14 is a view conceptually illustrating a process for estimating an angle of the electric vehicle based on an angle of a license plate in an image in an image-based object detection process for charging an electric vehicle according to an exemplary embodiment of the present disclosure.

FIG. 15 is a flowchart conceptually illustrating an image-based object detection method for charging an electric vehicle according to an exemplary embodiment of the present disclosure.

FIG. 16 is a flowchart conceptually illustrating a charging robot control process linked with an image-based object detection method for charging an electric vehicle according to an exemplary embodiment of the present disclosure.

FIG. 17 is a block diagram illustrating a generalized configuration of hardware of a device, a controller, a computing system, and/or a charging robot that detects an object or controls the charging robot based on an image, in relation to an electric vehicle charging system, an electric vehicle supply equipment (EVSE), and/or a charging manipulator according to an exemplary embodiment of the present disclosure.

[Best mode of the Invention]

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure. In the description of each drawing, like reference numerals refer to like components.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC)" or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

Hereinafter, exemplary embodiments of the present disclosure are described in detail with reference to the drawings herewith.

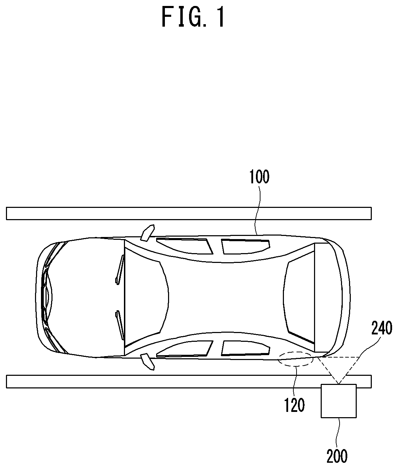

FIG. 1 is a view illustrating an example of an image-based object detection process for charging an electric vehicle to which an exemplary embodiment of the present disclosure is applied, and illustrating a state in which a charging port of the electric vehicle is parked outside an operation range of a charging robot.

As shown in FIG. 1, a charging process of the electric vehicle 100 may be performed by at least one component of the electric vehicle 100 and a charging station, and may be utilized to transmit power to the electric vehicle 100 in a wired manner or in a wireless manner.

The electric vehicle 100 according to an exemplary embodiment of the present disclosure may include a hybrid automobile having an electric motor and a general internal combustion engine together, and may include not only an automobile but also a motorcycle, a cart, a scooter, and an electric bicycle.

The electric vehicle 100 may generally be defined as a vehicle that supplies current derived from a rechargeable energy storage apparatus such as a battery as a power source of an electric motor as a drive apparatus.

In addition, the electric vehicle 100 may include a power reception apparatus/pad including a reception coil so that a battery is charged wirelessly, and may further include a plug connector so that a battery is charged in a wired manner. The electric vehicle 100 capable of charging a battery in a wired manner may be referred to as a Plug-in Electric Vehicle (PEV).

The charging station may be connected to a power grid or a power backbone, and may provide alternating current (AC) power or direct current (DC) power to a power transmission apparatus/pad including a transmission coil through a power link.

In addition, the charging station may communicate with the power grid or an infrastructure management system or an infrastructure server that manages the power grid through wired or wireless communication, and may perform wireless communication with the electric vehicle 100. The wireless communication may include Bluetooth, zigbee, cellular, a wireless local area network, etc.

In addition, for example, the charging station may be located at various places such as a parking lot attached to a house of an owner of the electric vehicle 100, a parking area for electric vehicle charging at a gas station, or a parking area of a shopping center or a workplace.

Here, a process of charging the battery of the electric vehicle 100 in a wired manner or in a wireless manner may be performed by the power reception apparatus/pad of the electric vehicle 100 being located in an energy field of the power transmission apparatus/pad, and by a transmission coil of the power transmission apparatus/pad and a reception coil of the power reception apparatus/pad interacting or coupling with each other. As a result of the interaction or coupling, an electromotive force may be induced in the power reception apparatus/pad, and the battery may be charged by the induced electromotive force.

In addition, the charging station and the power transmission apparatus/pad may be referred to as a Supply Power Circuit (SPC) or a Ground Assembly (GA) in whole or in part, and the SPC or the GA may refer to the meaning defined above.

In addition, the power reception apparatus/pad of the electric vehicle 100 and all or part of other internal components of the electric vehicle 100 may be referred to as an Electric Vehicle Power Circuit (EVPC) or a Vehicle Assembly (VA), and the EVPC or the VA may refer to the meaning defined above.

An electric vehicle charging system may include a conductive charging system using a cable or a wireless power transmission system of a non-contact type, but is not limited thereto. An electric vehicle charging system may basically be defined as a system that charges a battery mounted in the electric vehicle 100 by using power of a distribution network of commercial power or power of an energy storage apparatus, and such an electric vehicle charging system may have various forms depending on types of electric vehicles.

For example, a representative standard for wireless charging, SAE TIR J2954, establishes an industry standard specification guideline that defines interoperability, electromagnetic compatibility, minimum performance, safety, and tests for wireless charging of light-duty electric and plug-in electric vehicles. It will be apparent to those skilled in the art that similar guidelines may be applied to wired charging systems.

An electric vehicle wired/wireless charging system may include three elements as follows.

1) GA coil for power connection, a power converter connected to a grid, and a communication link with a vehicle system

2) VA coil having rectification and filtering components, charging control power electronics required for regulation/-safety/shutdown when necessary, and a communication link with a base station side

3) secondary energy storage system, battery management system components, and related modules required for in-vehicle communication (CAN, LIN) required for battery SOC, a charge rate, and other necessary information

Furthermore, since the VSE Field of a WLAN does not include detailed information such as a maximum charging power, a user may fail to properly connect to a charger actually intended for charging in a charging station in which one SECC and multiple EVSEs coexist.

Furthermore, after the vehicle performs WLAN association with a charger/SECC, a positioning procedure may be performed for precise alignment between the vehicle and the EVSE, and, in the case of wireless charging (WPT), when alignment between a vehicle-side pad and an EVSE pad is not properly achieved, a charging efficiency may be lowered or charging may become impossible. In addition, after the positioning is completed, a procedure for checking whether physical connection with the EVSE actually intended for charging is possible may also be required, and, when physical connection with the EVSE intended for charging is not possible, charging may not be performed. For this reason, a pairing procedure between the vehicle and the EVSE may be performed after WLAN association. To this end, in the case of wireless charging, IEC 61950-2 defines positioning and pairing methods using a separate Point to Point Signal (P2PS). However, in the case of a robot-based charging system using an automatic connection device (ACD), a separate positioning and pairing method has not yet been defined in any standard.

In the present disclosure, an image-based object detection procedure for accurate positioning, aligning, pairing, and mating between a charging manipulator for the electric vehicle 100 and a charging door/port of the electric vehicle 100, and a charging robot control procedure linked thereto, is proposed.

Power transfer may be performed from a transmission coil/primary coil (L1) to a reception coil/secondary coil (L2), and, in this case, a resonance frequency of the transmission coil (L1) and the reception coil (L2) may be configured to be similar to or the same as each other, and the reception coil (L2) may be configured to be located in a near field of an electromagnetic field generated from the transmission coil (L1).

Meanwhile, since power loss may increase as the transmission coil (L1) and the reception coil (L2) are located farther apart, determining positions of both coils may be an important factor.

In this case, the transmission coil (L1) may be included in a power transmission apparatus/pad, and the reception coil (L2) may be included in a power reception apparatus/pad. In addition, the transmission coil may be referred to as a primary coil or a GA coil (Ground Assembly coil), and the reception coil may be referred to as a secondary coil or a VA coil (Vehicle Assembly coil). Accordingly, position determination between the power transmission apparatus/pad and the power reception apparatus/pad, or position determination between the electric vehicle 100 and the power transmission apparatus/pad, may also be an important factor.

Position alignment between the power transmission apparatus/pad and the power reception apparatus/pad, and between the power transmission apparatus/pad and the electric vehicle 100 in FIG. 1 may correspond to alignment defined above, and thus may be defined as position alignment between the SPC/GA and the EVPC/VA, and is not limited to position alignment between the power transmission apparatus/pad and the power reception apparatus/pad.

Referring again to FIG. 1, positions at which a charging door/port 120 of the electric vehicle 100 to which an exemplary embodiment of the present disclosure is applied may be disposed are exemplarily illustrated.

In an alternative exemplary embodiment of the present disclosure, positions at which a charging door/port may be disposed in the electric vehicle 100 may include a front bumper, a front fender panel, or a rear fender panel, etc.

Although not illustrated in detail in FIG. 1, in exemplary embodiments of the present disclosure, each charging door/port may be classified into a vehicle internal switch type in which a switch capable of opening and closing the door is disposed inside the vehicle, a vehicle external switch type in which a switch capable of opening and closing the door is disposed outside the vehicle, and a push door type in which the door is opened and closed from outside the vehicle by a pressing force.

In the vehicle internal switch type, a switch capable of opening and closing the charging door/port is disposed near a driver's seat inside the vehicle, and a driver or a passenger may operate the switch to open and close the charging door/port. In the vehicle external switch type, a switch capable of mechanically opening and closing the charging door/port is generally disposed outside the vehicle and may be disposed near the charging door/port. However, in a modified exemplary embodiment, an external switch may be manually operated or may be disposed at a predetermined distance from the charging door/port.

The push door type is a modified type of the vehicle external switch type, and a push switch may be disposed inside the charging door/port. The push switch may be manually operated or may be mechanically operated.

In an exemplary embodiment, a separate cover for an inlet serving as a charging socket disposed in the vehicle may be disposed. When the inlet cover is disposed inside the charging door/port, the inlet cover may be implemented with plastic or rubber components for insulation.

Referring again to FIG. 1, a position of the charging door/port 120 of the electric vehicle 100 to which an exemplary embodiment of the present disclosure is applied, a charging robot 200 having a charging manipulator, and an operation range 240 of the charging robot 200 are exemplarily illustrated.

The charging robot 200 may be a device of various types referred to as an ACD (Automated Connection Device, Automatic Charging Device, Autoconnect Charging Device), or may include an ACD.

In FIG. 1, for convenience of explanation, the charging robot 200 is illustrated as an ACD-S (Side) type having a charging manipulator. However, the spirit of the present disclosure is not limited to a specific exemplary embodiment, and, in an alternative exemplary embodiment of the present disclosure, the present disclosure may also be applied to an ACD-U (Underbody) type or an ACD-R (Roof) type.

In an exemplary embodiment of the present disclosure, the operation range 240 of the charging robot 200 may refer to an ACD mating space. In an alternative exemplary embodiment, the operation range 240 of the charging robot 200 may refer to a range of a space combining a movable distance of the charging robot 200 and the ACD mating space.

Referring to a process of identifying types and specifications of the electric vehicle 100 to be described later, the operation range 240 of the charging robot 200 in FIG. 1 may be adjusted in consideration of a movable range of a manipulator or the like on a side of an ACD counterpart of the electric vehicle 100, and mating availability may be determined.

Since a state in which the charging port (charging door/port) 120 of the electric vehicle 100 is parked outside the operation range 240 of the charging robot 200 is illustrated in FIG. 1, an image-based object detection method for charging an electric vehicle according to an exemplary embodiment of the present disclosure may obtain a position and an angle of the electric vehicle 100 based on an image, may recognize that the charging port 120 is in a state parked outside the operation range 240 of the charging robot 200, and may guide the electric vehicle 100 to be re-parked.

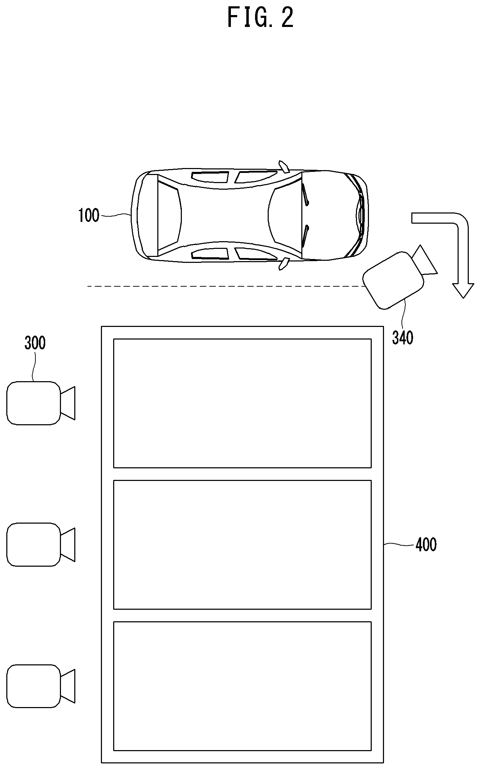

FIG. 2 is a view illustrating, as an example of an image-based object detection process for charging an electric vehicle to which an exemplary embodiment of the present disclosure is applied, cameras disposed in a charging station and a parking space.

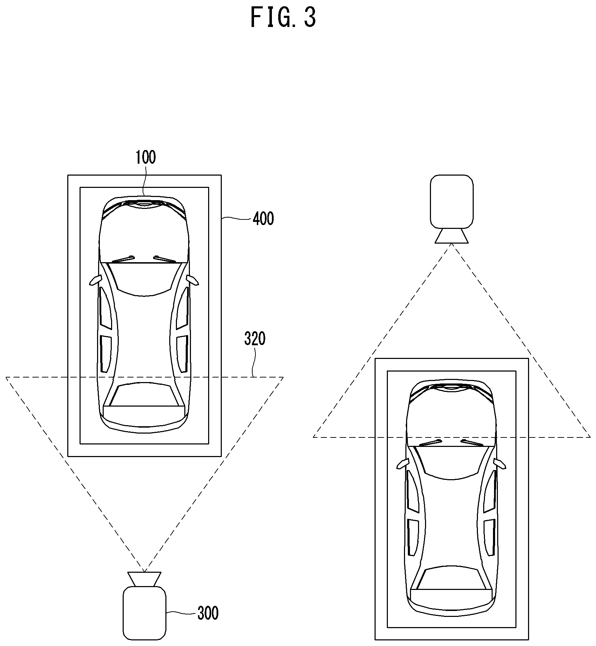

FIG. 3 is a view conceptually illustrating a process in which an image is obtained by a camera disposed in the parking space, as an example of an image-based object detection process for charging an electric vehicle to which an exemplary embodiment of the present disclosure is applied.

As shown in FIGS. 2 and 3, one first camera 300 for object recognition may be disposed for each parking surface or parking space 400. As illustrated in FIG. 3, a photographing range 320 of the first camera 300 may be configured such that the first camera 300 covers an entirety of the parking space 400 corresponding thereto.

As illustrated in FIG. 3, the first camera 300 may be installed at either a front side or a rear side of the parking space 400.

Since the electric vehicle 100 is required to be parked at a specific parking space 400 in order to compare the operation range 240 of the charging robot 200 with a position of the charging door/port 120 of the electric vehicle 100 (for example, a state in which the electric vehicle 100 is parked in one of parking spaces A, B, and C), a license plate/vehicle number recognition result of the electric vehicle 100 in an image obtained by the first camera 300 may be utilized to estimate a position and an angle of the electric vehicle 100 on the parking space 400.

In an alternative exemplary embodiment of the present disclosure, a second camera 340 serving as an auxiliary camera for recognizing an entry of the electric vehicle 100 into the charging station and recognizing a license plate/vehicle number of the electric vehicle 100 may further be disposed.

In an alternative exemplary embodiment of the present disclosure, the second camera 340 may perform an auxiliary role such as recognizing a license plate/vehicle number of the electric vehicle 100 entering the charging station and cross-checking a license plate/vehicle number recognition result of the electric vehicle 100 in the image obtained by the first camera 300.

A license plate/vehicle number of the electric vehicle 100 recognized by the second camera 340 may be used to verify whether the license plate/vehicle number recognition result of the electric vehicle 100 in the image obtained by the first camera 300 matches, or may be used to obtain information such as a vehicle type, a charging port type, or a charging port position of the electric vehicle 100 in advance based on the license plate/vehicle number recognized by the second camera 340 when the electric vehicle 100 enters.

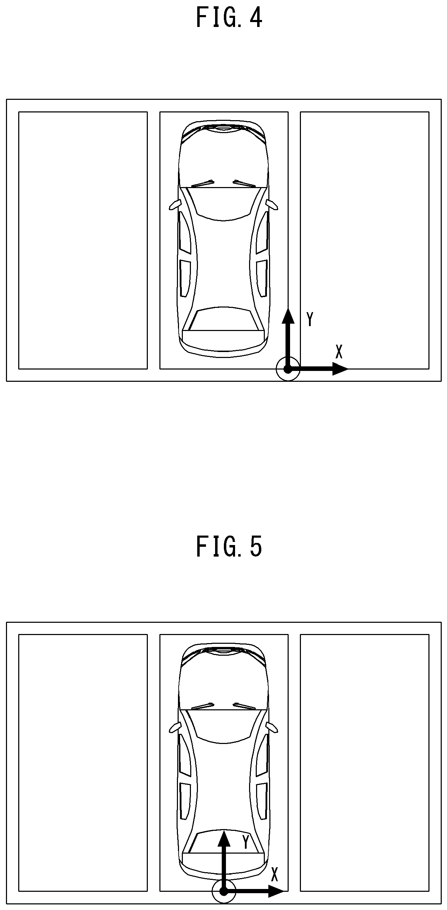

FIGS. 4 and 5 are views conceptually illustrating exemplary embodiments of a two-dimensional reference coordinate system of the parking space to which an exemplary embodiment of the present disclosure is applied.

As illustrated in FIGS. 4 and 5, an x-axis may indicate a left-right direction of a vehicle or the parking space, and a y-axis may indicate a front-rear direction of a vehicle or the parking space. Although not illustrated in FIGS. 4 and 5, a z-axis may indicate an up-down direction of the vehicle.

A coordinate system of the parking space may use a position on a boundary line of the parking space as a reference point (origin). The coordinate system may use one of four corners of an individual parking space as the reference point (origin), or may use a middle position between two adjacent corners among the four corners of the individual parking space as the reference point (origin).

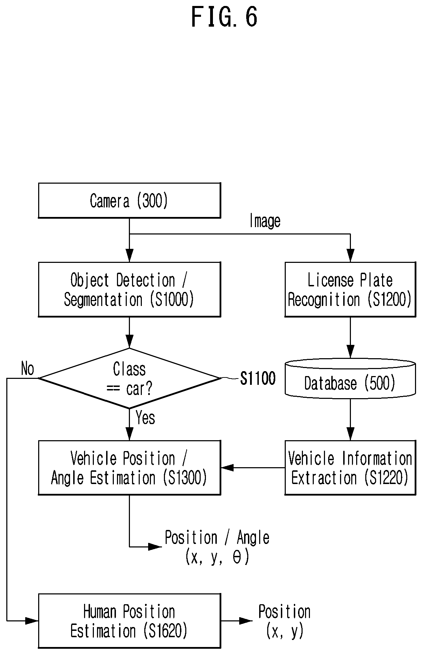

FIG. 6 is a flowchart illustrating an image-based object detection process for charging an electric vehicle according to an exemplary embodiment of the present disclosure.

As shown in FIG. 6, an object may be detected/segmented from an image obtained by the first camera 300 for object recognition corresponding to each parking space 400 and including an entirety of each parking space 400 within the photographing range (S1000).

In operation S1000, an object may be detected from the image, and segmentation may be performed in order to extract a shape of the detected object. In an alternative exemplary embodiment of the present disclosure, detection and segmentation of the object may be performed together. In an exemplary embodiment of the present disclosure, detection and/or segmentation may be performed using a known artificial neural network.

In order to classify a type of the detected/segmented object, a classification operation S1100 may be performed. In operation S1100, it may be determined whether a class of the detected/segmented object is an automobile. A subsequent process may branch depending on a type of the detected/segmented object.

When the object in the classification operation S1100 is a vehicle, a position and an angle of the vehicle may be estimated (S1300).

Independently of operation S1000, a license plate of the vehicle may be recognized from the image obtained by the first camera 300 (S1200).

The license plate of the vehicle is generally a rectangle or a rectangle having rounded corners, so detection and segmentation are facilitated, and since a number in the license plate of the vehicle is a combination of characters and numerals, the vehicle number may be easily identified using general OCR techniques or artificial neural network-based text recognition techniques.

In an alternative exemplary embodiment of the present disclosure, a license plate of the vehicle may additionally be recognized from an image obtained by the second camera 340 of FIG. 2. A license plate or vehicle number additionally recognized from the image of the second camera 340 may be used to assist operation S1200 or may be used to cross-check a recognition result of operation S1200.

By searching a database 500 using the vehicle number that is a recognition result of operation S1200, vehicle information may be extracted (S1220). The vehicle information may include a vehicle type, a vehicle size, a charging port position, etc.

In operation S1300, the vehicle information may be used to estimate a position and an angle of the vehicle on the parking space 400.

Since an image obtained from the first camera 300 is biased toward a front or a rear side of the vehicle, vehicle information such as a size of the vehicle may be required in order to estimate a position and an angle of the vehicle on the parking space 400.

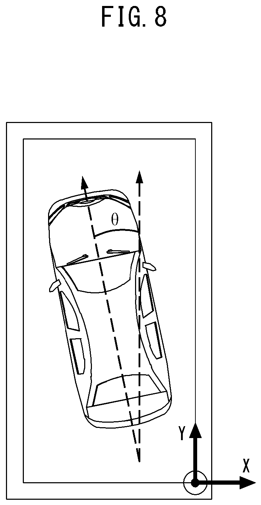

A result of operation S1300 may include two-dimensional coordinates (x, y) on the parking space 400 and an angle θ formed by the vehicle with an x-axis or a y-axis on the parking space 400. A result of operation S1300 may be described in FIG. 8 to be described later.

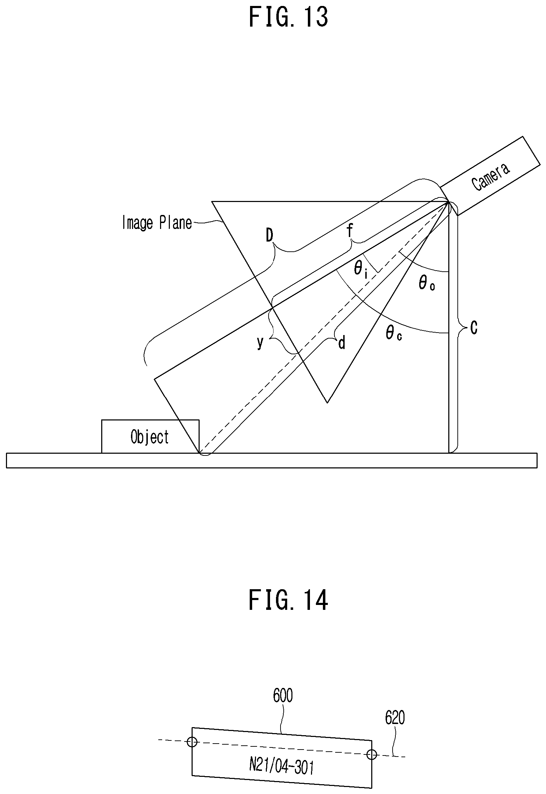

In operation S1300, after extracting a lowest point of an image of a segment of the vehicle, a position of the vehicle may be estimated based on a geometric relationship between the first camera 300 and the parking space 400 (a positional relationship between the first camera 300 and the parking space 400). This process may be supplemented by FIG. 13 to be described later.

In operation S1300, an angle of a license plate in the image may be estimated by recognizing an area around the license plate through text detection and extracting a horizontal line. On the parking space 400, an angle θ formed by the vehicle with the x-axis or the y-axis may be estimated based on an angle of the license plate in the image and the vehicle information (size, type). This process may be supplemented by FIG. 14 to be described later.

When the object in the classification operation S1100 is not the vehicle, a human position may be estimated after undergoing an additional process of determining whether the object is a human (S1620).

In operation S1620, after extracting a lowest point of an image of a segment of the human, a position (x, y) of the human may be estimated based on a geometric relationship between the first camera 300 and the parking space 400 (a positional relationship between the first camera 300 and the parking space 400). This process may be supplemented by FIG. 13 to be described later.

Using the vehicle position/angle information of operation S1300, the vehicle may be mapped on a 2D map of the parking space 400. Using the human position information of operation S1620, the human may be mapped on a 2D map of the parking space 400.

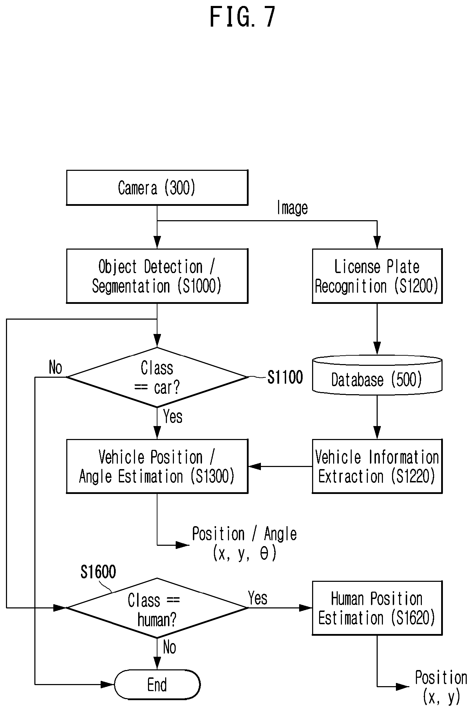

FIG. 7 is a flowchart conceptually illustrating an image-based object detection process for charging an electric vehicle according to another exemplary embodiment of the present disclosure.

As shown in FIG. 7, an automobile classification process in operation S1100 and a human classification process in operation S1600 may be performed in parallel to classify types of at least one object detected and segmented in operation S1000.

Operations other than operation S1100 and operation S1600 in FIG. 7 may be identical or similar to the operations in FIG. 6, and therefore redundant descriptions may be omitted.

For example, when two or more objects are detected in an image, each of the objects may be classified into a first object corresponding to a vehicle and a second object corresponding to a human or an animal through operation S1100 and operation S1600 that are performed in parallel.

For the first object corresponding to the vehicle, coordinates (x, y) of a position on a 2D map of a parking space 400 and an angle θ may be estimated through operation S1300.

For the second object corresponding to the human or the animal, coordinates (x, y) of a position on the 2D map of the parking space 400 may be estimated through operation S1620.

In operation S1000 of FIG. 6 and FIG. 7, a technique capable of recognizing a vehicle or a human as an object on a single image and extracting a shape of the object may be utilized. For example, segmentation models such as CNN, U-NET, and V-NET may be utilized, and the concept of the present disclosure may be applied to various image-based object detection and segmentation techniques without limitation to a specific type of artificial neural network model.

In operation S1200 of FIG. 6 and FIG. 7, a text detection algorithm may be utilized to recognize a license plate, which is a major feature of a vehicle on an image. For example, a CNN-based model may be utilized.

FIG. 8 is a view conceptually illustrating an example of a process in which a position and an angle of an electric vehicle are estimated on a two-dimensional reference coordinate system of a parking space in an image-based object detection process for charging an electric vehicle according to an exemplary embodiment of the present disclosure.

As shown in FIG. 8, a two-dimensional reference coordinate system (x, y), having one of four corners of the parking space as an origin, and an angle θ formed between a parked direction of the vehicle and a y-axis are illustrated.

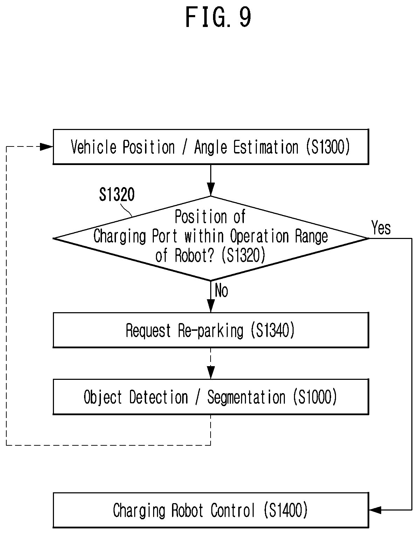

FIG. 9 is a flowchart conceptually illustrating an exemplary embodiment in which an image-based object detection process for charging an electric vehicle is associated with a charging robot control process according to an exemplary embodiment of the present disclosure.

The operation in FIG. 9 may be performed by a computing system of a charging station, a charging robot, a controller of the charging robot, a controller of an EVSE, or cooperation and distribution of tasks among these devices.

As shown in FIG. 9, a position and an angle of the vehicle are estimated in operation S1300, and whether a position of a charging port derived based on vehicle information and the position and the angle of the vehicle is within an operation range of the charging robot may be determined (S1320).

The operation range of the charging robot may be given as a range such as [x_min, x_max] and [y_min, y_max], for example.

When the position of the charging port is within the operation range of the charging robot, the charging robot may approach the vehicle so that a manipulator is connected or aligned to a chargeable position and charging may be started (S1400).

When the position of the charging port is not within the operation range of the charging robot, the vehicle may be requested or guided to re-park (S1340), and operations such as operation S1000, operation S1100, and operation S1300 may be performed again for an image obtained after the vehicle is re-parked.

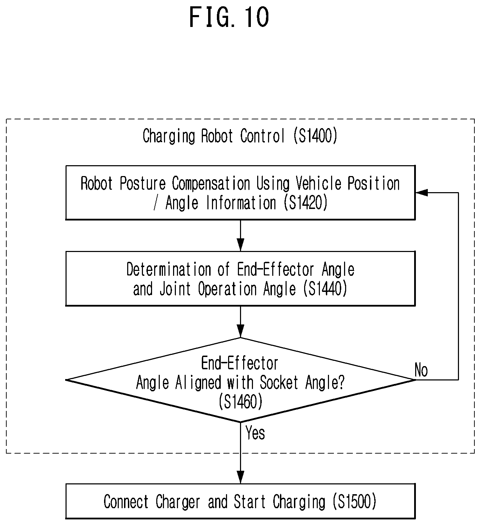

FIG. 10 is a flowchart conceptually illustrating a control process of a charging robot associated with an image-based object detection process for charging an electric vehicle according to an exemplary embodiment of the present disclosure.

As shown in FIG. 10, the control process of the charging robot in operation S1400 is illustrated as an example.

A posture of the charging robot may be compensated using vehicle position and angle information (S1420).

A driving angle of each joint and an angle of an end effector of the charging robot may be determined (S1440).

Whether an angle of the end effector of the charging robot corresponds to (matches) an angle of a socket may be determined (S1460).

When the angle of the end effector of the charging robot does not correspond to (does not match) the angle of the socket, operation S1420 and operation S1440 may be performed again.

When the angle of the end effector of the charging robot corresponds to the angle of the socket, a charger may be connected and charging may be started (S1500).

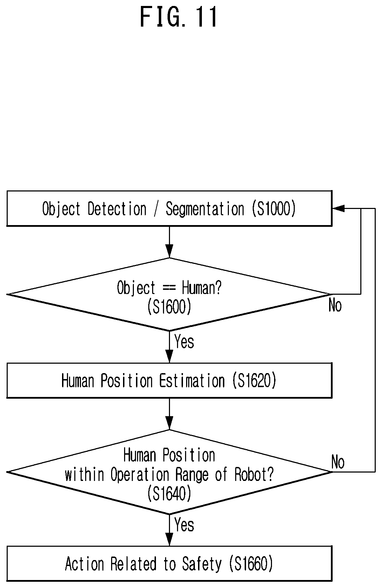

FIG. 11 is a flowchart illustrating a process of checking safety in a charging process and/or a charging preparation process as an image-based object detection process for charging an electric vehicle according to another exemplary embodiment of the present disclosure.

As shown in FIG. 11, whether a position of a person estimated in operation S1620 is located within an operation range of the charging robot may be determined (S1640).

When the estimated position of the person is not located within the operation range of the charging robot, no particular action may be required and continuous monitoring may be performed (repetition of operation S1000, operation S1600, and operation S1620).

When the estimated position of the person is located within the operation range of the charging robot, an action related to safety may be performed (S1660).

The action related to safety may include an alarm (visual or auditory), a stop during movement of the charging robot, a stop of charging during a charging operation, and so on.

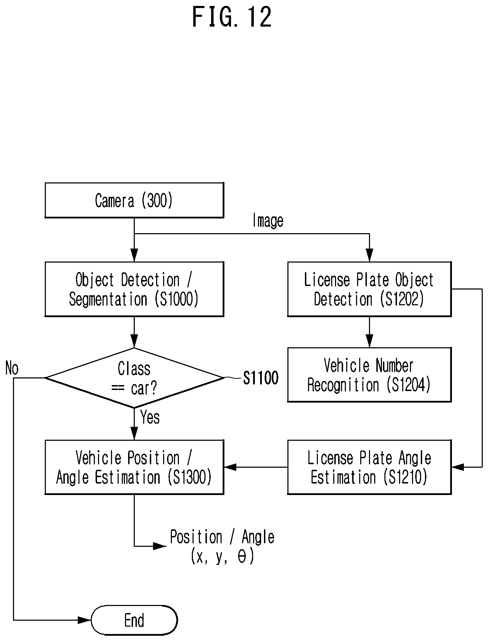

FIG. 12 is a flowchart illustrating an image-based object detection process for charging an electric vehicle according to another exemplary embodiment of the present disclosure.

As shown in FIG. 12, an alternative exemplary embodiment of a process of estimating a position and an angle of the vehicle is illustrated. Descriptions overlapping with FIGS. 6 and 7 may be omitted in FIG. 12.

A license plate may be recognized from an image in operation S1200.

In this case, the license plate may be detected as a third object (S1202).

Text may be detected from the detected license plate and a number of the vehicle may be identified (S1204).

A horizontal line of the license plate or text may be identified, and an angle formed by the horizontal line of the license plate or text in the image may be estimated (S1210).

In operation S1300, an angle of the vehicle may be estimated based on the angle formed by the horizontal line of the license plate or text in the image and geometry of the first camera 300 and the parking space 400.

FIG. 13 is a conceptual diagram illustrating a process of estimating a position of an object by considering a position of a camera in an image-based object detection process for charging an electric vehicle according to an exemplary embodiment of the present disclosure.

As shown in FIG. 13, a process of estimating an object position is illustrated.

A position of the vehicle may be estimated by using a center point (u, v) of the license plate in the image.

Depth may be calculated by using geometrical information between the camera 300 and a ground surface (such as a camera installation angle and a height).

$f$ : focal length

$y$ : cy (principal point) - a y-pixel coordinate value of the object

$\theta_c$ : camera angle (tilt)

$\theta_i$ : an angle between the focal length and a position of the object on an image plane

$\theta_o$ : $\theta_c - \theta_i$

$C$ : a height at which the camera 300 is installed

$d$ : a distance between the camera 300 and the object

$D$ : a depth of the object

In this case, the depth D may be calculated as shown in Equation 1 below.

[Equation 1]

$$d = C / (\cos \theta_o), \ D = d * (\cos \theta_i)$$

By using the depth and camera intrinsic parameters, a position of the license plate may be converted into a 3D point as shown in Equation 2 below.

[Equation 2]

$$X = (fx \ [u - Cx]) / D, \ Y = (fy \ [v - Cy]) / D, \ Z = D$$

FIG. 14 is a conceptual diagram illustrating a process of estimating an angle of an electric vehicle based on an angle of a license plate in an image in an image-based object detection process for charging an electric vehicle according to an exemplary embodiment of the present disclosure.

As shown in FIG. 14, a process of estimating a vehicle angle is illustrated.

An image may be cropped by a region of interest around a recognized license plate.

Edge detection 600 may be performed to find a horizontal line 620 from the cropped image. For example, by using a Ransac algorithm, a representative line may be searched and an equation of a straight line corresponding thereto may be derived.

Two intersection points between the straight line and left and right edges of the license plate may be converted into 3D coordinates $p_1$ and $p_2$ by using the method of FIG. 13.

The $p_1$ and $p_2$ are points on a camera coordinate system tilted by an installation angle of a camera, and a rotational transformation of Equation 3 may be applied to convert the points into a reference coordinate system of FIG. 8.

[Equation 3]

$$P_1 = R * p_1$$

$$P_2 = R * p_2$$

$P_1$ and $P_2$ are coordinates of $p_1$ and $p_2$ converted into the reference coordinate system of FIG. 8, and R is a rotation transformation matrix.

Since a vector $v_{12}$ passing through $P_1$ and $P_2$ represents an angle of the vehicle, an angle $\theta_{car}$ of the vehicle may be calculated by calculating an angle between a vector $v_x$ parallel to a parking transverse line and the vector $v_{12}$ as in Equation 4.

[Equation 4]

$$\theta_{car} = \arccos \left[ (v_{12} \cdot v_x) / ( \|v_{12}\| \cdot \|v_x\| ) \right]$$

$(\| \ \|)$ denotes a norm of a vector.

Thereafter, a process of mapping a position of an object to a 2D map is described.

A result of estimating the position and angle may be converted into a 2D coordinate system having a lower-right corner of the parking space in FIG. 8 as an origin.

A rotational and positional relationship between a camera coordinate system and the reference coordinate system of FIG. 8 may be defined as in Equations 5 and 6.

In this case, since the coordinate system corresponds to a top-view 2D map, z = 0 may be given.

[Equation 5]

$$R = \begin{bmatrix} 1 & 0 & 0 \\ 0 & -\cos\theta_c & \sin\theta_c \\ 0 & \sin\theta_c & \cos\theta_c \end{bmatrix}$$

[Equation 6]

$$t = [tx, ty, tz]$$

R is a rotation transformation matrix, t is a translation vector, and ti (i = x, y, z) denotes a translation value in each of x, y, and z directions.

By using vehicle information obtained in operation S1220, a position of a charging port inside a vehicle may be finally mapped on the 2D map through a positional and angular relationship between the license plate and the charging port.

As a result of such mapping, positions of the vehicle, an angle of the vehicle, and a position of the charging port may be mapped onto the parking space as in FIG. 1, and a comparison between an operation range of a charging robot and the position of the vehicle charging port may be performed.

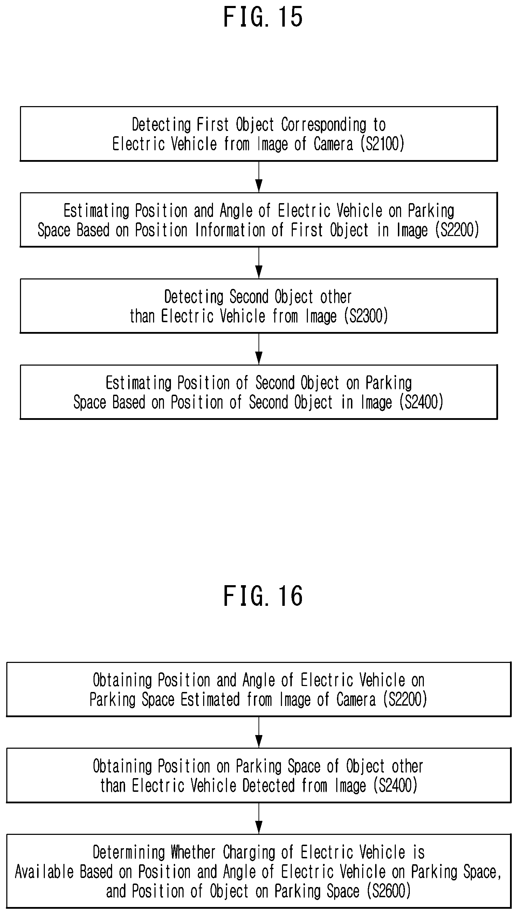

FIG. 15 is a flowchart conceptually illustrating an image-based object detection method for charging an electric vehicle according to an exemplary embodiment of the present disclosure.

As shown in FIG. 15, an image-based object detection method for charging an electric vehicle according to an exemplary embodiment of the present disclosure may be a method executed by a computing system or controller of a charging station interlocked with an electric vehicle supply equipment (EVSE) including a charging manipulator, and may include detecting a first object corresponding to an electric vehicle from an image obtained by a camera capable of obtaining an image of the electric vehicle from an outside of the electric vehicle (S2100); estimating a position and an angle of the electric vehicle on a parking space based on position information of the first object in the image (S2200); detecting at least one second object other than the electric vehicle from the image (S2300); and estimating a position of at least one second object on the parking space based on a position of at least one second object in the image (S2400).

The position information of the first object in the image may include a position and an angle, and a vehicle position may be estimated from a segmentation result of the vehicle object, and a vehicle angle may be estimated from an angle of a license plate. In addition, segmentation information or detection box information of a vehicle may be partially used.

The operation S2100 may refer to operations S1000 and S1100 of FIGS. 6, 7, and 12.

The operation S2200 may refer to operation S1300 of FIGS. 6, 7, and 12.

The operation S2300 may refer to operations S1000 and S1600 of FIGS. 6, 7, and 12.

The operation S2400 may refer to operation S1620 of FIGS. 6, 7, and 12.

In estimating the position and angle of the electric vehicle in operation S2200, the position and angle of the electric vehicle may be estimated on a 2D coordinate system having a position on a boundary line of a parking space as an origin.

The 2D coordinate system having a position on a boundary line of a parking space as an origin may refer to FIGS. 4 and 5.

The operation S2200 of estimating the position and angle of the electric vehicle may include mapping the first object onto a 2D map corresponding to the parking space based on the position information of the first object in the image; and estimating the position and angle of the first object on the 2D map as the position and angle of the electric vehicle.

The position information of the first object in the image may include vehicle position information and angle information of the license plate.

According to an alternative exemplary embodiment of the present disclosure, the position and angle may be estimated by using only one of the license plate and the vehicle.

In an image-based object detection method for charging an electric vehicle according to an exemplary embodiment of the present disclosure, detecting a first object corresponding to an electric vehicle may include segmenting an outline of the first object, and the position and angle of the first object in the image may be obtained based on a segmentation result of the first object.

In an alternative exemplary embodiment of the present disclosure, segmentation may not necessarily be required, and a vehicle position may be estimated by using coordinates of a detection box.

In an image-based object detection method for charging an electric vehicle according to an exemplary embodiment of the present disclosure, detecting a third object corresponding to a license plate of the electric vehicle from an image (refer to operation S1202 of FIG. 12) may further be included, and in this case, the operation S2200 of estimating the position and angle of the electric vehicle may include assisting extraction of position information of the first object in the image based on a position and an angle of the third object in the image.

In this case, although a region of a license plate in the image may be included in a region of a vehicle object, the license plate may be regarded as an object independent from the vehicle.

In an alternative exemplary embodiment of the present disclosure, the position and angle of the vehicle may be estimated by the license plate only, by the vehicle only, or by combining the license plate angle and the vehicle position.

In addition, after estimating the position and angle of the vehicle by using only the vehicle, the angle of the vehicle may be cross-checked by using the angle of the license plate.

In an image-based object detection method for charging an electric vehicle according to an exemplary embodiment of the present disclosure, detecting a third object corresponding to a license plate of the electric vehicle from an image (S1202) may further be included, and in this case, estimating the position and angle of the electric vehicle in operations S1300 and S2200 may include estimating the angle of the electric vehicle on a parking space based on the angle of the third object in the image.

In an image-based object detection method for charging an electric vehicle according to an exemplary embodiment of the present disclosure, identifying a license plate of the electric vehicle from an image (S1200, S1204); and extracting vehicle information of the electric vehicle from a database 500 by using the license plate of the electric vehicle (S1220) may further be included, and in estimating the position and angle of the electric vehicle in operations S1300 and S2200, the position and angle of the electric vehicle may be estimated on a parking space by using vehicle information of the electric vehicle.

In an image-based object detection method for charging an electric vehicle according to an exemplary embodiment of the present disclosure, estimating a position of a charging port of the electric vehicle based on the position and the angle of the electric vehicle on a parking space may further be included; and determining whether a position of the charging port of the electric vehicle is within an operation range of a charging robot (S1320) may further be included.

In an image-based object detection method for charging an electric vehicle according to an exemplary embodiment of the present disclosure, when the position of the charging port of the electric vehicle is not within an operation range of the charging robot, guiding the electric vehicle to re-park (S1340); and when the position of the charging port of the electric vehicle is within an operation range of the charging robot, guiding the charging robot to approach the electric vehicle may further be included.

Guiding the electric vehicle to re-park (S1340) may include requesting re-parking to a driver or requesting re-parking to an EVCC or ECU when the vehicle supports autonomous parking.

In an image-based object detection method for charging an electric vehicle according to an exemplary embodiment of the present disclosure, at least one second object may be a person or an animal.

In an image-based object detection method for charging an electric vehicle according to an exemplary embodiment of the present disclosure, determining whether any one of the at least one second object is located within an operation range of the charging robot may further be included; and when any one of the at least one second object is located within the operation range of the charging robot, executing an action related to safety may further be included.

The action related to safety may include generating an alarm (visual or auditory), causing a stop during movement of the charging robot, stopping charging during a charging operation, and so on.

FIG. 16 is a flowchart conceptually illustrating a control process of a charging robot interlinked with an image-based object detection method for charging an electric vehicle according to an exemplary embodiment of the present disclosure.

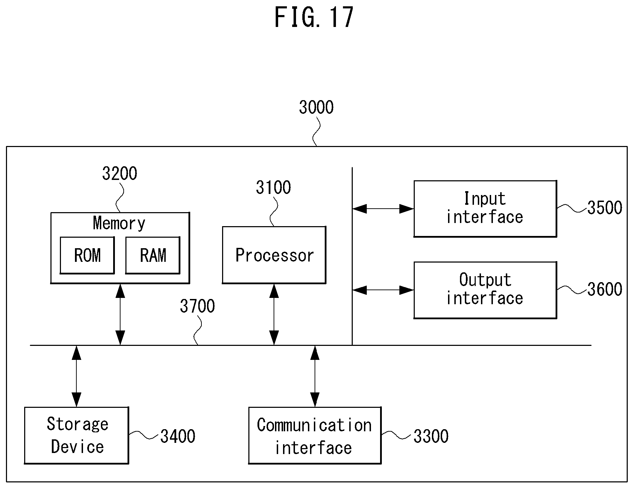

A charging robot 200 and/or a controller of the charging robot 200, which relates to an electric vehicle supply equipment (EVSE) including a charging manipulator and transmitting power to an electric vehicle according to an exemplary embodiment of the present disclosure, may include a memory storing at least one instruction; a processor loading and executing at least one instruction from the memory to control movement of the charging robot 200 or the charging manipulator; and a communication interface transmitting and receiving information required for a process of transmitting power to the electric vehicle with the EVSE. A hardware configuration of the charging robot 200 and/or the controller of the charging robot 200 may refer to the configuration illustrated in FIG. 17 to be described later.

As shown in FIG. 16 and FIG. 17, a processor in the charging robot 200 and/or the controller of the charging robot 200 according to an exemplary embodiment of the present disclosure may obtain a position and an angle of an electric vehicle on a parking space, estimated from an image obtained by a camera capable of obtaining an image of the electric vehicle from an outside of the electric vehicle (S2200), may obtain a position on the parking space of at least one object other than the electric vehicle detected from the image (S2400), and may determine whether charging of the electric vehicle is possible based on the position and angle of the electric vehicle on the parking space and the position on the parking space of at least one object (S2600 and S1320).

In the charging robot 200 and/or the controller of the charging robot 200 according to an exemplary embodiment of the present disclosure, the position and angle of the electric vehicle on the parking space and the position of at least one object on the parking space may be represented as a position and an angle on a 2D coordinate system having a position on a boundary line of the parking space as an origin.

In the charging robot 200 and/or the controller of the charging robot 200 according to an exemplary embodiment of the present disclosure, the processor may determine that the electric vehicle is not in a state in which charging is possible when a position of a charging port of the electric vehicle, estimated based on the position and angle of the electric vehicle on the parking space, is not within an operation range of the charging robot 200 (S2600 and S1320).

In the charging robot 200 and/or the controller of the charging robot 200 according to an exemplary embodiment of the present disclosure, the processor may determine that the electric vehicle is not in a state in which charging is possible when a position of at least one object on the parking space is within the operation range of the charging robot 200 (S2600 and S1320).

In the charging robot 200 and/or the controller of the charging robot 200 according to an exemplary embodiment of the present disclosure, when the electric vehicle is in a state in which charging is possible, the processor may control movement of the charging robot 200 and the charging manipulator so that the charging robot 200 moves toward the electric vehicle and the charging manipulator is connected to the charging port of the electric vehicle (S1400 and S1500).

For actual field application of an electric vehicle charging robot, a method for recognizing a surrounding situation of a charging station is required, and for this purpose, various facilities (cameras, etc.) inside and outside a parking lot may be utilized.

When the robot is actually applied, there may be a situation in which the robot may not operate due to incorrect parking, and furthermore, a dangerous situation may occur when a person approaches during movement of the robot.

According to an exemplary embodiment of the present disclosure, a robot interworking system with a camera installed outside a vehicle or outside a charging robot may be developed to solve the above problem, so that operation efficiency of the robot through recognition of a parking state and safety through determining whether a person approaches may be secured.

According to an exemplary embodiment of the present disclosure, since situational recognition is performed by using only one external camera without requiring additional sensors mounted on the robot itself, cost may be reduced.

According to an exemplary embodiment of the present disclosure, stability may be increased by performing robot control through identifying a risk factor such as robot collision.

According to an exemplary embodiment of the present disclosure, external practical application of a robot charging infrastructure may be made easier so that an unmanned charging system may be operated.

According to an exemplary embodiment of the present disclosure, by applying an intelligent situational recognition method of a robot, efficiency of a charging infrastructure may be improved and provision of qualitative service may be enabled, thereby securing a virtuous cycle structure of electric vehicle deployment.

FIG. 17 is a block diagram illustrating a generalized configuration of hardware of a device, a controller, a computing system, and/or the charging robot 200 detecting an object based on an image or controlling the charging robot 200 in relation to an electric vehicle charging system, an electric vehicle supply equipment (EVSE), and/or a charging manipulator according to an exemplary embodiment of the present disclosure.

Although omitted in drawings in the exemplary embodiments of FIG. 1 to FIG. 16, a processor and a memory may be electronically connected to respective components, and operations of respective components may be controlled or managed by the processor.

At least a part of a process of an image-based object detection method for charging an electric vehicle of the electric vehicle 100 according to an exemplary embodiment of the present disclosure may be executed by the computing system 3000 of FIG. 17. The controller or computing system 3000 according to an embodiment of the present disclosure may include at least one processor 3100 and the memory 3200 storing program instructions instructing the at least one processor 3100 to perform at least one process step. At least some of the operations or process steps of the method according to an embodiment of the present disclosure may be performed by the at least one processor 3100 loading and executing the program instructions from the memory 3200.

The processor 3100 may include a central processing unit (CPU) or a graphics processing unit (GPU) or may be implemented by another kind of dedicated processor suitable for performing the method of the present disclosure.

Each of the memory 3200 and the storage device 3400 may be comprised of at least one of a volatile storage medium and a non-volatile storage medium. For example, the memory 3200 may be comprised of at least one of a read only memory (ROM) and a random access memory (RAM).

Additionally, the computing system 3000 may include the communication interface 3300 that performs communications through a wire/wireless communication network.

Additionally, the computing system 3000 may further include the storage device 3400, the input interface 3500, and the output interface 3600.

Additionally, the components of the computing system 3000 may be connected to each other by the system bus 3700 to communicate with each other.

The controller 3100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

An image-based object detection apparatus according to an exemplary embodiment of the present disclosure may be installed on a charging-station side in relation to an electric vehicle charging system, an electric vehicle supply equipment (EVSE), and/or a charging manipulator, and may include a processor 3100 that receives at least one instruction from a memory 3200 and executes the instruction.

A processor 3100 of the image-based object detection apparatus for charging an electric vehicle according to an exemplary embodiment of the present disclosure may detect a first object corresponding to an electric vehicle from an image obtained by a camera capable of obtaining an image of an electric vehicle from an outside of the electric vehicle; may estimate a position and an angle of the electric vehicle on a parking space based on position information of the first object in the image; may detect at least one second object other than the electric vehicle from the image; and may estimate a position on the parking space of at least one second object based on a position of at least one second object in the image.

When estimating the position and the angle of the electric vehicle on the parking space, the processor 3100 may estimate the position and the angle of the electric vehicle on a 2D coordinate system having a position on a boundary line of the parking space as an origin.

When estimating the position and the angle of the electric vehicle, the processor 3100 may map the first object onto a 2D map corresponding to the parking space based on position information of the first object in the image, and may estimate the position and the angle of the first object on the 2D map as the position and the angle of the electric vehicle.

When detecting the first object corresponding to the electric vehicle, the processor 3100 may segment an outline of the first object, and the position and the angle of the first object in the image may be obtained based on a segmentation result of the first object.

The processor 3100 may detect a third object corresponding to a license plate of the electric vehicle from the image and, when estimating the position and the angle of the electric vehicle, may assist extraction of position information of the first object in the image based on a position and an angle of the third object in the image.

The processor 3100 may detect the third object corresponding to the license plate from the image and, when estimating the position and the angle of the electric vehicle, may estimate the angle of the electric vehicle on the parking space based on an angle of the third object in the image.

The processor 3100 may identify the license plate of the electric vehicle from the image and may extract vehicle information of the electric vehicle from a database using the license plate of the electric vehicle, and when estimating the position and the angle of the electric vehicle, the processor 3100 may estimate the position and the angle of the electric vehicle on the parking space using the vehicle information of the electric vehicle.

The processor 3100 may estimate a position of a charging port of the electric vehicle based on the position and the angle of the electric vehicle on the parking space and may determine whether the position of the charging port of the electric vehicle is within an operation range of a charging robot.

The processor 3100 may guide the electric vehicle to re-park when the position of the charging port of the electric vehicle is not within the operation range of the charging robot, and may guide the charging robot to approach the electric vehicle when the position of the charging port of the electric vehicle is within the operation range of the charging robot.

In the image-based object detection apparatus for charging an electric vehicle according to an exemplary embodiment of the present disclosure, at least one second object may be a person or an animal.

The processor 3100 may determine whether any one of the at least one second object is located within the operation range of the charging robot, and may execute an action related to safety when any one of the at least one second object is located within the operation range of the charging robot.

A charging robot or a controller thereof interlinked with an image-based object detection method according to an exemplary embodiment of the present disclosure may include a processor 3100 that receives at least one instruction from a memory 3200 and executes the instruction.

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

**Claims**

1. A method for image-based object detection for charging an electric vehicle, comprising:

   detecting a first object corresponding to the electric vehicle from an image obtained by a camera configured to obtain an image of the electric vehicle from outside the electric vehicle;
   estimating a position and an angle of the electric vehicle on a parking space based on position information of the first object in the image;
   detecting at least one second object other than the electric vehicle from the image; and
   estimating a position of the at least one second object on the parking space based on a position of the at least one second object in the image.

2. The method of claim 1, wherein the estimating of the position and the angle of the electric vehicle comprises estimating the position and the angle of the electric vehicle on a two-dimensional coordinate system having a position on a boundary line of the parking space as a reference point.

3. The method of claim 1, the estimating of the position and the angle of the electric vehicle comprises:

   mapping the first object onto a two-dimensional map corresponding to the parking space based on the position information of the first object in the image, and
   estimating a position and an angle of the first object on the two-dimensional map as the position and the angle of the electric vehicle.

4. The method of claim 1, wherein the detecting of the first object corresponding to the electric vehicle comprises segmenting an outline of the first object, and
wherein a position and an angle of the first object in the image are obtained based on a segmentation result of the first object.

5. The method of claim 1, further comprising detecting a third object corresponding to a license plate of the electric vehicle from the image,
wherein the estimating of the position and the angle of the electric vehicle comprises assisting extraction of the position information of the first object in the image based on a position and an angle of the third object in the image.

6. The method of claim 1, further comprising detecting a third object corresponding to a license plate of the electric vehicle from the image,
wherein the estimating of the position and the angle of the electric vehicle comprises estimating an angle of the electric vehicle on the parking space based on an angle of the third object in the image.

7. The method of claim 1, further comprising:

identifying a license plate of the electric vehicle from the image, and
extracting vehicle information of the electric vehicle from a database by using the license plate of the electric vehicle,
wherein the estimating of the position and the angle of the electric vehicle comprises estimating the position and the angle of the electric vehicle on the parking space by using the vehicle information of the electric vehicle.

8. The method of claim 1, further comprising:

estimating a position of a charging port of the electric vehicle based on the position and the angle of the electric vehicle on the parking space, and
determining whether the position of the charging port of the electric vehicle is within an operation range of a charging robot.

9. The method of claim 8, further comprising:

guiding the electric vehicle to re-park based on the position of the charging port of the electric vehicle not being within the operation range of the charging robot, and
guiding the charging robot to approach the electric vehicle based on the position of the charging port of the electric vehicle being within the operation range of the charging robot.

10. The method of claim 1, wherein the at least one second object includes a person or an animal,
and further comprising:

determining whether any one of the at least one second object is located within an operation range of the charging robot, and
performing an action related to safety based on any one of the at least one second object being located within the operation range of the charging robot.

11. A controller of a charging robot associated with an electric vehicle supply equipment (EVSE) including a charging manipulator to transfer power to an electric vehicle, comprising:

a memory that stores at least one instruction;
a processor that controls movement of the charging robot or the charging manipulator by loading and executing the at least one instruction from the memory; and
a communication interface that transmits and receives information required for a process of transferring power to the electric vehicle with the EVSE,
wherein the processor is configured to:

obtain a position and an angle of the electric vehicle on a parking space, the position and the angle being estimated from an image obtained by a camera configured to obtain an image of the electric vehicle from outside the electric vehicle,
obtain a position of at least one object other than the electric vehicle on the parking space, the position being detected from the image, and
determine whether the electric vehicle is in a state in which charging of the electric vehicle is possible based on the position and the angle of the electric vehicle on the parking space and the position of the at least one object on the parking space.

12. The controller of claim 11, wherein the position and the angle of the electric vehicle on the parking space and the position of the at least one object on the parking space are represented as a position and an angle on a two-dimensional coordinate system having a position on a boundary line of the parking space as a reference point.

13. The controller of claim 11, wherein the processor is configured to determine that the electric vehicle is not in a state in which charging of the electric vehicle is possible based on a position of a charging port of the electric vehicle estimated in view of the position and the angle of the electric vehicle on the parking space not being within an operation range of the charging robot.

14. The controller of claim 11, wherein the processor is configured to determine that the electric vehicle is not in a state in which charging of the electric vehicle is possible based on a position of the at least one object on the parking space being within an operation range of the charging robot.

15. The controller of claim 11, wherein the processor is configured to control movement of the charging robot and the charging manipulator to move the charging robot to the electric vehicle and connect the charging manipulator to a charging port of the electric vehicle based on the electric vehicle being in a state in which charging of the electric vehicle is possible.

16. A charging robot associated with an electric vehicle supply equipment (EVSE) including a charging manipulator to transfer power to an electric vehicle, comprising:

a memory that stores at least one instruction;
a processor that controls movement of the charging robot or the charging manipulator by loading and executing the at least one instruction from the memory; and
a communication interface that transmits and receives information required for a process of transferring power to the electric vehicle with the EVSE,
wherein the processor is configured to:

obtain a position and an angle of the electric vehicle on a parking space, the position and the angle being estimated from an image obtained by a camera configured to obtain an image of the electric vehicle from outside the electric vehicle,
obtain a position of at least one object other than the electric vehicle on the parking space, the position being detected from the image, and
determine whether charging of the electric vehicle is available based on the position and the angle of the electric vehicle on the parking space and the position of the at least one object on the parking space.

17. The charging robot of claim 16, wherein the position and the angle of the electric vehicle on the parking space and the position of the at least one object on the parking space are represented as a position and an angle on a two-dimensional coordinate system having a position on a boundary line of the parking space as a reference point.

18. The charging robot of claim 16, wherein the processor is configured to determine that the electric vehicle is not in a state in which charging of the electric vehicle is possible based on a position of a charging port of the electric vehicle estimated in view of the position and the angle of the electric vehicle on the parking space not being within an operation range of the charging robot.

19. The charging robot of claim 16, wherein the processor is configured to determine that the electric vehicle is not in a state in which charging of the electric vehicle is possible based on a position of the at least one object on the parking space being within an operation range of the charging robot.

20. The charging robot of claim 16, wherein the processor is configured to control movement of the charging robot and the charging manipulator to move the charging robot to the electric vehicle and connect the charging manipulator to a charging port of the electric vehicle based on the electric vehicle being in a state in which charging of the electric vehicle is possible.

# FIG. 1

# FIG. 2

# FIG. 3

# FIG. 4

# FIG. 5

# FIG. 6

Camera (300)

Image

Object Detection /
Segmentation (S1000)

License Plate
Recognition (S1200)

Class
== car? — S1100

Database (500)

No

Yes

Vehicle Position /
Angle Estimation (S1300)

Vehicle Information
Extraction (S1220)

Position / Angle
(x, y, θ)

Human Position
Estimation (S1620)

Position
(x, y)

# FIG. 7

Camera (300)

Image

Object Detection / Segmentation (S1000)

License Plate Recognition (S1200)

No ← Class == car? — S1100

Database (500)

Yes

Vehicle Position / Angle Estimation (S1300) ← Vehicle Information Extraction (S1220)

Position / Angle (x, y, θ)

S1600

Class == human? — Yes → Human Position Estimation (S1620)

No

End

Position (x, y)

FIG. 8

# FIG. 9

```
          ┌─────────────────────────────────────────────┐
    ┌ ─ ─ ▶│  Vehicle Position / Angle Estimation (S1300)│
    ┊      └─────────────────────────────────────────────┘
    ┊                           │
    ┊          S1320            ▼
    ┊                     ╱─────────────────╲
    ┊                  ╱  Position of          ╲        Yes
    ┊              ╱  Charging Port within Operation Range ╲──────┐
    ┊              ╲       of Robot? (S1320)            ╱         │
    ┊                  ╲─────────────────────────────╱           │
    ┊                           │ No                             │
    ┊                           ▼                                │
    ┊      ┌─────────────────────────────────────────────┐       │
    ┊      │         Request Re-parking (S1340)           │       │
    ┊      └─────────────────────────────────────────────┘       │
    ┊                           ┊                                 │
    ┊                           ▼                                 │
    ┊      ┌─────────────────────────────────────────────┐       │
    └ ─ ─ ─│   Object Detection / Segmentation (S1000)    │       │
           └─────────────────────────────────────────────┘       │
                                                                  │
                                                                  │
           ┌─────────────────────────────────────────────┐       │
           │       Charging Robot Control (S1400)         │◀──────┘
           └─────────────────────────────────────────────┘
```

# FIG. 10

Charging Robot Control (S1400)

Robot Posture Compensation Using Vehicle Position / Angle Information (S1420)

↓

Determination of End-Effector Angle and Joint Operation Angle (S1440)

↓

End-Effector Angle Aligned with Socket Angle? (S1460)

No

Yes

↓

Connect Charger and Start Charging (S1500)

# FIG. 11

```
┌──────────────────────────────────────────────┐
│ Object Detection / Segmentation (S1000)       │◄───┐
└──────────────────────────────────────────────┘    │
                      │                              │
                      ▼                              │
              ╱───────────────╲                      │
             ╱  Object == Human? ╲        No         │
             ╲     (S1600)       ╱────────────────────┘
              ╲───────────────╱
                      │ Yes
                      ▼
┌──────────────────────────────────────────────┐
│ Human Position Estimation (S1620)             │
└──────────────────────────────────────────────┘
                      │
                      ▼
              ╱───────────────╲
             ╱  Human Position   ╲      No
             ╲ within Operation Range of Robot? ╲────────┐
             ╱     (S1640)       ╱                        │
              ╲───────────────╱                           │
                      │ Yes                               │
                      ▼                                   │
┌──────────────────────────────────────────────┐         │
│ Action Related to Safety (S1660)              │         │
└──────────────────────────────────────────────┘         │
```

# FIG. 12

```
┌─────────────────────┐
│     Camera (300)    │
└─────────────────────┘
          │                        Image
          │         ┌───────────────────────────┐
          ▼         ▼                            
┌─────────────────────┐      ┌─────────────────────┐
│ Object Detection /  │      │ License Plate Object │
│ Segmentation (S1000)│      │   Detection (S1202)  │
└─────────────────────┘      └─────────────────────┘
          │                            │
          ▼                            ▼
   No  ╱───────╲  S1100        ┌─────────────────────┐
 ◄─────   Class  ───────       │   Vehicle Number    │
       ╲ == car?╱              │ Recognition (S1204) │
        ╲─────╱                └─────────────────────┘
          │ Yes                        │
          ▼                            ▼
┌─────────────────────┐      ┌─────────────────────┐
│  Vehicle Position / │ ◄────│ License Plate Angle │
│Angle Estimation(S1300)     │  Estimation (S1210) │
└─────────────────────┘      └─────────────────────┘
          │
          ▼
    Position / Angle
      (x, y, θ)

        (  End  )
```

# FIG. 13

# FIG. 14

## FIG. 15

```
Detecting First Object Corresponding to
Electric Vehicle from Image of Camera (S2100)
```

↓

```
Estimating Position and Angle of Electric Vehicle on Parking
Space Based on Position Information of First Object in Image (S2200)
```

↓

```
Detecting Second Object other
than Electric Vehicle from Image (S2300)
```

↓

```
Estimating Position of Second Object on Parking
Space Based on Position of Second Object in Image (S2400)
```

## FIG. 16

```
Obtaining Position and Angle of Electric Vehicle on
Parking Space Estimated from Image of Camera (S2200)
```

↓

```
Obtaining Position on Parking Space of Object other
than Electric Vehicle Detected from Image (S2400)
```

↓

```
Determining Whether Charging of Electric Vehicle is
Available Based on Position and Angle of Electric Vehicle on Parking Space,
and Position of Object on Parking Space (S2600)
```

FIG. 17

## INTERNATIONAL SEARCH REPORT

| International application No. |
| --- |
| **PCT/KR2024/014032** |

| | |
| --- | --- |
| **A. CLASSIFICATION OF SUBJECT MATTER** | |

**B60L 53/37**(2019.01)i; **B60L 53/36**(2019.01)i; **B25J 13/08**(2006.01)i; **B25J 9/16**(2006.01)i; **B25J 11/00**(2006.01)i; **B25J 19/02**(2006.01)i

According to International Patent Classification (IPC) or to both national classification and IPC

**B. FIELDS SEARCHED**

Minimum documentation searched (classification system followed by classification symbols)

B60L 53/37(2019.01); B60L 50/50(2019.01); B60L 53/14(2019.01); B60L 53/36(2019.01); G06N 3/08(2006.01); H02J 7/00(2006.01); H02J 7/14(2006.01); H04N 7/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기차(electric car), 충전(charging), 이미지(image), 카메라(camera), 위치(position), 각도(angle)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2023-0094310 A (HYUNDAI MOTOR COMPANY et al.) 28 June 2023 (2023-06-28) See paragraphs [0001]-[0115]; claims 1-17; and figures 1-9. | 1-3,5-6,8-20 |
| A | | 4,7 |
| Y | US 7999506 B1 (HOLLAR, Seth Edward-Austin et al.) 16 August 2011 (2011-08-16) See column 2, lines 20-25; claim 1; and figure 1. | 1-3,5-6,8-20 |
| Y | KR 10-1973389 B1 (CHOI, Hae-Dong et al.) 23 August 2019 (2019-08-23) See claim 1. | 2-3,12,17 |
| Y | KR 10-2023-0127425 A (KOREA AUTOMOTIVE TECHNOLOGY INSTITUTE) 01 September 2023 (2023-09-01) See claims 1-5. | 5-6 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 December 2024** | **16 December 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/014032** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2022-0072193 A (TARDIS TECHNOLOGY. INC.) 02 June 2022 (2022-06-02)<br>See paragraph [0021]; and figure 4. | 1-20 |

Form PCT/ISA/210 (second sheet) (July 2022)

**INTERNATIONAL SEARCH REPORT**
Information on patent family members

International application No.

**PCT/KR2024/014032**

| Patent document cited in search report | | | Publication date (day/month/year) | Patent family member(s) | | | Publication date (day/month/year) |
|---|---|---|---|---|---|---|---|
| KR | 10-2023-0094310 | A | 28 June 2023 | EP | 4202859 | A2 | 28 June 2023 |
| | | | | EP | 4202859 | A3 | 09 August 2023 |
| | | | | US | 2023-0191934 | A1 | 22 June 2023 |
| US | 7999506 | B1 | 16 August 2011 | None | | | |
| KR | 10-1973389 | B1 | 23 August 2019 | KR | 10-2069541 | B1 | 11 February 2020 |
| | | | | WO | 2020-022654 | A1 | 30 January 2020 |
| KR | 10-2023-0127425 | A | 01 September 2023 | None | | | |
| KR | 10-2022-0072193 | A | 02 June 2022 | KR | 10-2617924 | B1 | 27 December 2023 |

Form PCT/ISA/210 (patent family annex) (July 2022)